# EUROPÄISCHE PATENTANMELDUNG

(11) **EP 3 072 934 A1**
(43) Veröffentlichungstag der Anmeldung: **28.09.2016**
(21) Anmeldenummer: 15161468.2
(22) Anmeldetag: 27.03.2015
(51) Int. Cl.: C09D 5/00

(54) **Schichtbau, Verfahren zu dessen Herstellung und Verwendung desselben**

(71) Anmelder: FL Services GmbH, 56288 Korweiler (DE)
(72) Erfinder: Welk, Joachim, 27612 Nesse (DE)
(74) Vertreter: Scholz, Volker

(57) **Zusammenfassung**

Die vorliegende Erfindung betrifft einen Schichtaufbau Schichtaufbau, umfassend: a) eine Metallschicht, b) eine Trennschicht, und c) eine Klarlackschicht, wobei die Trennschicht zwischen der Metallschicht und der Klarlackschicht angeordnet ist, und wobei die Trennschicht zumindest einen Stoff, ausgewählt aus der Gruppe, bestehend aus einer Polyurethan-Dispersion, Polyvinylpyrrolidon, Kunstharzlack oder Mischungen derselben, vorzugsweise Polyurethan-Dispersion, umfasst, sowie ein Verfahren zu dessen Herstellung und dessen Verwendung.

## Beschreibung

Die vorliegende Erfindung betrifft einen Schichtaufbau, ein Verfahren zu dessen Herstellung sowie die Verwendung des Schichtaufbaus.

Durch die Beschichtung von Fahrzeugteilen oder Schiffskörpern mit Chrom können stark glänzende Fahrzeug- bzw. Schiffskörperoberflächen erhalten werden. Durch den so erzeugten optischen Eindruck wird eine exklusive Wirkung erzielt und ein edles Aussehen erhalten. Eine Möglichkeit, solche Chrombeschichtungen zu erhalten, ist die galvanische Abscheidung von Chrom auf Fahrzeugen oder Teilen derselben.

Als Alternative zu solchen galvanischen Verfahren wurden daher in der Vergangenheit verschiedene Lacke entwickelt, die auf Oberflächen, insbesondere von Fahrzeugen, Fahrzeugteilen oder Schiffen, aufgetragen werden können.

Alternativ wird im Stand der Technik, etwa in der DE 10 2013 009 148 A1, vorgeschlagen, eine Metallschicht bereitzustellen, die durch Metallpigmente in Form von Metallpartikeln innerhalb eines Schichtaufbaus gebildet wird.

Die aus dem Stand der Technik bekannten Metallbeschichtungen haben, auch wenn diese in herkömmliche Schichtaufbauten eingebettet sind, den Nachteil, dass das Metall physikalischen und chemischen Einwirkungen, insbesondere Oxidationsprozessen, ausgesetzt ist. Auf diese Weise wird eine Veränderung der Metallschicht hervorgerufen, die insbesondere die optischen Eigenschaften der Beschichtung erheblich beeinträchtigen kann.

Es ist daher die Aufgabe der vorliegenden Erfindung, Schichtaufbauten bereitzustellen, die Nachteile des Stands der Technik überwinden, insbesondere die physikalische und/oder chemische Veränderung von Metallbeschichtungen, die auch in einem Schichtaufbau eingebettet sein können, zu verringern oder zu verhindern. Insbesondere ist es die Aufgabe einen Schichtaufbau bereitzustellen, der die Veränderung von Metallbeschichtungen auf Fahrzeugteilen oder Schiffskörpern, insbesondere auf Schiffsteilen, die dem Meerwasser ausgesetzt sind, effektiv unterbindet. Es ist hierbei insbesondere die Aufgabe, dass eine ausreichende Langzeitstabilität des Schichtaufbaus erzielt wird, das heißt, das eine Verhinderung der Veränderung der Metallschicht über einen ausreichend langen Zeitraum gewährleistet wird, so dass eine Neubeschichtung der beschichteten Oberfläche lediglich in ökonomisch akzeptablen Abständen erfolgen muss.

Diese Aufgabe wird gelöst durch einen Schichtaufbau, umfassend a) eine Metallschicht, b) eine Trennschicht, und c) eine Klarlackschicht, wobei die Trennschicht zwischen der Metallschicht und der Klarlackschicht angeordnet ist, und wobei die Trennschicht zumindest einen Stoff, ausgewählt aus der Gruppe, bestehend aus einer Polyurethan-Dispersion, Polyvinylpyrrolidon, einen Kunstharzlack auf Testbenzin-Lösungsmittelbasis oder Mischungen derselben, vorzugsweise Polyurethan-Dispersion, umfasst.

Dabei kann vorgesehen sein, dass die Polyurethan-Dispersion eine Polyurethan-Dispersion frei von organischem Lösungsmittel, d. h. eine Polyurethan-Dispersion auf Wasserbasis, ist.

Die beste Stabilität, das heißt der beste Schutz der Metallschicht vor äußeren Einflüssen, wurde hierbei unter Verwendung von Polyurethan-Dispersionen in der Trennschicht erreicht, wobei auch bei Verwendung der übrigen aufgeführten Stoffe eine zufriedenstellende Langzeitstabilität erreicht werden konnte.

Falls die Trennschicht Polyvinylpyrrolidon umfasst, kann bevorzugt vorgesehen sein, dass das Polyvinylpyrrolidon unter Kühlen auf die Metallschicht aufgebracht wird. Die Kühlung kann beispielsweise dadurch erreicht werden, dass das Polyvinylpyrrolidon in einem verflüssigten Treibgas bereitgestellt wird und mittels Sprühen aus einer Sprühdose auf die Metallschicht aufgetragen wird. Durch die Expansion des Treibgases und die damit einhergehende Kühlung (Joule-Thomson-Effekt) wird eine ausreichende Kühlung des Polyvinylpyrrolidons während des Auftragens erreicht.

Testbenzin, oder auch Siedegrenzbenzin, ist eine farblose Flüssigkeit mit benzinartigem Geruch. Bei ihr handelt es sich zumeist um ein Gemisch von Kohlenwasserstoffen mit einem Aromaten Anteil, der in der Regel unter 25 % liegt ("aromatenarm"). Testbenzin hat einen Flammpunkt über 21 °C und einen Siedebereich zwischen 130°C und 220°C.

Für die erfindungsgemäße Verwendung des Kunstharzlackes in der Trennschicht hat sich die Verwendung von entaromatisiertem Testbenzin als besonders vorteilhaft erwiesen.

Hierbei kann vorgesehen sein, dass der Schichtaufbau auf einem Träger aufgebracht ist.

Prinzipiell ist die spezifische Natur des Trägers in dem erfindungsgemäßen Verfahren nicht beschränkt, soweit eine ausreichende Haftung der Metallschicht gewährleistet ist. Geeignete Träger wird der Fachmann ohne Aufwand dem Stand der Technik auf Grundlage seines allgemeinen Fachwissens entnehmen. Insbesondere ist erfindungsgemäß bevorzugt vorgesehen, dass es sich bei dem Träger um eine Fahrzeugkarosserie, Fahrzeugteile, Schiffskörper, insbesondere einen Yachtkörper, handelt.

Die dem Träger am nächsten liegende Schicht ist hierbei die Metallschicht. Dieser folgt eine Trennschicht, auf der eine Klarlackschicht angeordnet ist. Erfindungsgemäß kann ebenso vorgesehen sein, dass der Träger eine oder mehrere weitere Schichten, allgemein als Grundierung bezeichnet, umfasst, insbesondere Kunststoff und/oder Kunstharzschichten. Die Grundierung ist auf dem Träger so angeordnet, dass diese in dem Schichtaufbau in Kontakt mit der Metallschicht ist.

Es kann bevorzugt vorgesehen sein, dass der Kunststoff und/oder das Kunstharz, der oder das die Grundierung bildet, Polyurethan, Epoxidharz, Polyacrylat oder Mischungen derselben ist.

Ebenso kann bevorzugt vorgesehen sein, dass der Kunststoff und/oder das Kunstharz zusätzlich einen Schwarzton aufweist, beispielsweise durch die Beimengung von Ruß, Graphit etc. Erfindungsgemäß kann besonders bevorzugt sein, dass der Kunststoff und/oder das Kunstharz der Grundierung nach dem Aufbringen auf dem Träger für längere Zeit, vorzugsweise etwa eine Woche bei Raumtemperatur unter Normaldruck an der Luft stehengelassen wird, um ein Ausgasen zu gewährleisten. Falls nötig kann vorzugsweise vorgesehen sein, dass die so erhaltene Oberfläche der Schicht poliert wird.

Vorzugsweise ist vorgesehen, dass ein Metall oder Metalloxid in der Metallschicht ausgewählt ist aus Chrom, Chrom(III)-Oxid, Aluminium, Eisen, Kupfer, Messing, Edelmetall oder Mischungen derselben, vorzugsweise Aluminium oder einer Mischung aus Chrom und Chrom(III)-Oxid.

Der Begriff Edelmetall umfasst in diesem Zusammenhang insbesondere Gold und Silber, wobei allerdings auch andere Edelmetalle, wie Platin, Iridium, Palladium, Osmium, Rhodium oder Ruthenium erfindungsgemäß vorgesehen sein können. Falls Mischungen von Metallen verwendet werden, kann vorgesehen sein, dass verschiedene Partikel unterschiedlicher Metalle verwendet werden, wobei jede Partikelsorte jeweils nur ein Metall enthält. Ebenso kann die Verwendung von Legierungen erfindungsgemäß vorgesehen sein.

Die erfindungsgemäße Metallschicht kann sowohl eine durchgehende Metallschicht sein als auch eine Metallschicht, die durch separate Metallpigmente beziehungsweise -partikel gebildet wird. In einer bevorzugten Ausführungsform der Erfindung enthält die Metallschicht Metallpartikel. Insbesondere kann vorgesehen sein, dass die Metallschicht im wesentlichen aus den Metallpartikeln gebildet wird. Besonders bevorzugt sind hierbei Metallpartikel einer Halbwärtskorngröße die D50 von 2-20 µm. Die Verwendung von Metallpartikeln kann insbesondere mit Kostenersparnissen einhergehen.

Der Begriff Metallpartikel im Sinne der vorliegenden Erfindung ist gleichbedeutend mit Metallpigmenten.

Unter Halbwertskorngröße (D50) ist diejenige Partikelgröße zu verstehen, oberhalb und unterhalb der sich je die halbe Menge der Teilchengrößenverteilung befindet.

Es kann bevorzugt sein, dass es sich bei den Metallpartikeln um sphärische Partikel handelt. Erfindungsgemäß ebenso vorgesehen sind allerdings auch solche Partikel, die eine nichtsphärische Gestalt aufweisen. In diesem Fall soll sich der Begriff der Halbwertskorngröße auf den Durchmesser der Partikel in zumindest einer Raumrichtung beziehen.

Dem Fachmann sind zahlreiche Verfahren zur Bestimmung der Partikelgrößen aus dem Stand der Technik bekannt, beispielsweise Transmissionselektronenmikroskopie (TEM), Rasterlektronenmikroskopie (SEM), Lichtstreuung usw. So ist beispielsweise aus dem Stand der Technik bekannt, dass Partikelgrößen leicht durch Lichtstreungsexperimente, etwa unter Verwendung eines Partikelgrößenanalysators CILAS 1064, bestimmt werden können.

Es kann insbesondere bevorzugt sein, dass die Metallpartikel eine Halbwertskorngröße D50 von 5-15 µm, noch mehr bevorzugt 8-12 µm, insbesondere bevorzugt 9-11 µm aufweisen.

Weitere wichtige Parameter zur Charakterisierung der Partikel hinsichtlich ihrer Größe sind die Parameter D10 und D90. Analog zur Halbwertskorngröße D50 ist unter D10 diejenige Partikelgröße zu verstehen, unterhalb der sich 10% der Menge der Teilchengrößenverteilung befindet. In gleicher Weise ist unter dem Zahlenwert der D90 diejenige Partikelgröße zu verstehen, unterhalb derer sich 90% der Menge der Teilchengrößenverteilung befindet.

Vorzugsweise kann ein D10-Wert der Metallpartikel von 2-10 µm, besonders bevorzugt 4-8 µm und insbesondere bevorzugt 5-7 µm vorgesehen sein.

Ebenso kann bevorzugt ein D90-Wert der Metallpartikel von 15-35 µm, insbesondere von 20-30 µm vorgesehen sein.

Unter Verwendung von Metallpartikeln der aufgeführten Größen konnten besonders gute optische Eigenschaften der Metallschicht beobachtet werden.

Erfindungsgemäß kann vorgesehen sein, dass die Metallschicht nach einem in der DE 10 2013 009 148 A1 beschriebenen Verfahren, das heißt unter Verwendung einer an gleicher Stelle beschriebenen Mischung zur Herstellung einer Schicht, in einem Schichtaufbau bereitgestellt wird.

Vorzugsweise kann erfindungsgemäß vorgesehen sein, dass ein Polyurethan der Polyurethan-Dispersion ausgewählt ist aus aliphatischem Polycarbonat-Polyurethan, aliphatischem Polyurethan auf Basis eines Dimeroleoesters, einem aliphatischen, Polyester-Carbonat basierenden anionischen Polyurethan oder Mischungen derselben, vorzugsweise aliphatischen Polycarbonat-Polyurethan. Unter Verwendung dieser Verbindungen konnte eine außerordentliche Langzeitstabilität beobachtet werden.

Erfindungsgemäß kann hierbei insbesondere vorgesehen sein, dass es sich bei dem Polyurethan um ein aliphatisches Polycarbonat-Polyurethan ohne freie Isocyanatgruppen handelt. Die Trennschicht kann hierbei insbesondere vorteilhaft unter Verwendung einer wässrigen, lösungsmittelfreien, niedrigviskosen Dispersion eines aliphatischen Polycarbonat-Polyurethans ohne freie Isocyanatgruppen erhalten werden, die hierfür auf die Metallschicht aufgebracht wird. Eine erfindungsgemäß besonders bevorzugte Zusammensetzung zur Herstellung der erfindungsgemäßen Trennschicht ist hierbei eine Polyurethan-Dispersion PU 61 der Firma Kremer Pigmente mit einer Zusammensetzung, wie sie zum Prioritätstag vertrieben wurde. Durch Verwendung dieses spezifischen Polyurethans in der Trennschicht, beziehungsweise der im Vorangehenden beschriebenen Dispersion zur Herstellung derselben, konnte eine außerordentlich hohe Langzeitstabilität der Metallschicht erreicht werden, wobei überraschenderweise die optischen Eigenschaften der Metallschicht gegenüber anderen Schichtaufbauten des Stands der Technik sogar signifikant verbessert werden konnten.

Erfindungsgemäß ebenso bevorzugt sein kann, dass zur Herstellung der Trennschicht eine wässrige Dispersion eines aliphatischen Polyurethans auf Basis eines Dimeroleoesters verwendet wird. Eine erfindungsgemäß bevorzugte Zusammensetzung dieser Art zur Herstellung einer erfindungsgemäßen Trennschicht ist Ecrothan^{®} 95 der Firma Ecronova Polymer mit einer Zusammensetzung, wie sie zum Prioritätstag vertrieben wurde. Neben einer hervorragenden Langzeitstabilität der Metallschicht konnte sowohl unter Verwendung der vorangehenden Polyurethane als auch bei der Verwendung der Zusammensetzung zur Herstellung derselben eine leichte Verbesserung der optischen Eigenschaften des Schichtaufbaus erreicht werden.

Eine weitere erfindungsgemäß bevorzugte Zusammensetzung zur Herstellung einer erfindungsgemäßen Trennschicht ist eine aliphatische, Polyester-Polycarbonat-basierende, anionische Polyurethan-Dispersion, die vorzugsweise lösungsmittelfrei ist. Solche bevorzugte Zusammensetzung zur Herstellung der Trennschicht ist etwa Bayhydrol^{®} UH XP 2648/1 der Firma Bayer mit einer Zusammensetzung, wie sie zum Prioritätstag vertrieben wurde. Neben einer hervorragenden Langzeitstabilität der Metallschicht konnte sowohl unter Verwendung der vorangehenden Polyurethane als auch bei der Verwendung der Zusammensetzung zur Herstellung derselben eine leichte Verbesserung der optischen Eigenschaften des Schichtaufbaus erreicht werden.

Erfindungsgemäß ebenso bevorzugt vorgesehen ist, dass die Klarlackschicht einen Polyurethanklarlack, Acrylklarlack, Nanoklarlack oder Mischungen derselben umfasst.

Unter Nanoklarlack, bzw. Nanoklarlack, soll hierbei ein (Klar)-Lack verstanden werden, der mit Keramikpartikeln einer Größe von 1 bis 500 nm versetzt ist. Zur Herstellung werden die Nano-Keramikpartikel unter den normalen Klarlack gemischt. Es ist aus dem Stand der Technik bekannt, dass Nanoklarlacke deutlich resistenter gegenüber äußeren, mechanischen Einwirkungen, Säuren und Schmutz sind. Zudem lässt eine solche Oberflächenstruktur Schmutz leichter abperlen.

Besonders bevorzugt ist hierbei als Nanoklarlack ein zweikomponentiges Polyethersiloxan-Harz, wobei der Lack ein unpigmentierter Klarlack ist. Dieser bevorzugte Nanoklarlack weist vorteilhafte Eigenschaften, insbesondere beim Korrosionsschutz für Edelstahl, unbehandeltes Aluminium sowie alle eloxierten und chromatisierten Flächen auf. Extrem abrieb-, stoß- und kratzbeständige Verschmutzungen können mittels eines solchen bevorzugten Nanoklarlacks ohne speziellen Aufwand entfernt werden. Der so bevorzugte Nanoklarlack ist seewasser- und salzluftresistent, schützt vor saurem Regen, reduziert Ausbleichung von Aluminium und Edelstahl, ist beständig gegen viele Chemikalien und frei von organischen Lösungsmitteln, Chromat und Blei im Sinne der Gefahrenstoffverordnung. Mit dem bevorzugten Nanoklarlack behandelte lackierte Flächen können mit jedem handelsüblichen Reiniger gereinigt werden. Aufgrund der im Vorangehenden beschriebenen Eigenschaften ist der bevorzugte Nanoklarlack insbesondere geeignet zur erfindungsgemäßen Verwendung auf Schiffsteilen oberhalb und unterhalb der Wasserlinie, insbesondere Deck, Aufbauten und Masten.

Allgemein kann zum Aufbringen der unterschiedlichen Schichten jedes aus dem Stand der Technik bekannte Verfahren verwendet werden. Insbesondere bevorzugt vorgesehen sind hierbei Flüssigbeschichtungsverfahren, wie Bemalen, Färben, Lackieren, Rotationsbeschichten, Spritzlackieren, Handlackieren, Schlitzdüsenbeschichten, Tauchbeschichten, Sprühbeschichten, etc., vorzugsweise Spritzlackieren oder Handlackieren.

Bei Verwendung eines Metalllacks wird besonders bevorzugt mit einer Fließbecherpistole mit einer bevorzugten Düsengröße von 0,8 mm oder computergesteuert mit einer Spritzanlage aufgetragen, wobei im letzteren Fall die Düsengröße angepasst werden muss.

Vorzugsweise kann vorgesehen sein, dass die Trennschicht in direktem Kontakt mit der Metallschicht ist.

Die Aufgabe wird ferner gelöst durch ein Verfahren zur Herstellung eines Schichtaufbaus nach einem der vorangehenden Ansprüche, umfassend: a) Bereitstellen einer Metallschicht, b) Aufbringen eines Gemisches, umfassend zumindest einen Stoff, ausgewählt aus der Gruppe, bestehend aus einer Polyurethan-Dispersion, Polyvinylpyrrolidon, Kunstharzlack auf Testbenzin - Lösungsmittelbasis oder Mischungen derselben, vorzugsweise Polyurethan-Dispersion, sowie ein Lösungsmittel, auf der Metallschicht, c) Trocknen des Gemischs, um eine Trennschicht auszubilden, wobei während des Trocknens das Lösungsmittel zumindest teilweise verdampft wird, und d) Aufbringen einer Klarlackschicht auf die Trennschicht.

Hierbei ist bevorzugt, dass das Lösungsmittel ein Alkohol, besonders bevorzugt Isopropanol, und/oder Wasser ist.

Unter Verwendung derartiger Lösungsmittel, wobei Isopropanol und Wasser, entweder alleine oder als Gemisch, sich als besonders vorteilhaft erwiesen haben, konnte eine besonders gleichmäßige Trennschichtbildung beobachtet werden.

Während des Trocknen des Gemischs ist erfindungsgemäß bevorzugt vorgesehen, dass das Lösungsmittel(-gemisch) im wesentlichen vollständig verdampft. Das Lösungsmittel ist im wesentlichen vollständig verdampft, wenn in der Trennschicht bei Raumtemperatur oder moderatem Erhitzen eine Massenkonstanz erreicht wurde.

Ferner wird die Aufgabe gelöst durch die Verwendung eines erfindungsgemäßen Schichtaufbaus zum Beschichten einer Metallschicht zum Schutz der Metallschicht vor äußeren Einflüssen.

Schließlich wird die Aufgabe gelöst durch die Verwendung des erfindungsgemäßen Schichtaufbaus oder erhältlich durch das erfindungsgemäße Verfahren als Beschichtung von Fahrzeugkarosserien oder Boots- bzw. Schiffsrümpfen, insbesondere Yachtrümpfen, von Scheinwerfern, insbesondere Fahrzeugscheinwerfern, Reflektoren, Beschlägen, insbesondere Türgriffen oder Möbelstückgriffen.

Erfindungsgemäß ist hierbei ebenfalls eine Verwendung des erfindungsgemäßen Schichtaufbaus als Beschichtung von Fahrzeugteilen, Bootsteilen oder Schiffsteilen vorgesehen. In diesem Zusammenhang soll eine Verwendung so verstanden werden, dass die Fahrzeug-, Bootsoder Schiffsoberfläche bzw. die Oberfläche von Teilen derselben als Träger im Sinne des erfindungsgemäßen Verfahrens anzusehen ist.

Überraschenderweise wurde von den Erfindern festgestellt, dass durch den erfindungsgemäßen Schichtaufbau eine Beschichtung von Oberflächen, etwa von Fahrzeugkarosserien oder Boots- bzw. Schiffsrümpfen, insbesondere von Yachtrümpfen, erreicht werden kann, die Nachteile des Stands der Technik überwindet, insbesondere für einen gegenüber dem Stand der Technik deutlich erhöhten Schutz des Metalls in einer Metallschicht vor physikalischen und chemischen Einflüssen, etwa Oxidation, beziehungsweise Veränderung zu erreichen. Der erfindungsgemäße Schichtaufbau zeichnet sich hierbei insbesondere dadurch gegenüber dem Stand der Technik aus, dass eine deutlich verbesserte Langzeitstabilität des erfindungsgemäßen Schichtaufbaus mit gleichbleibend guten optischen Eigenschaften des Schichtaufbaus verknüpft werden können. Dies bedeutet insbesondere, dass durch die Verwendung der erfindungsgemäßen Trennschicht zum Schutz einer darunterliegenden Metallschicht der Glanz der Metallschicht nicht oder nicht signifikant beeinträchtigt wird. In bevorzugten Ausführungsformen konnten die optischen Eigenschaften, etwa der Glanz, gesteigert werden.

Weitere Vorteile der Erfindung ergeben sich, ohne den Schutzbereich der Erfindung hierdurch einzuschränken, aus der detaillierten Beschreibung der Erfindung anhand der folgenden Beispiele.

### Beispiele

In allen Beispielen wurde ein erfindungsgemäßer Schichtaufbau auf einem Träger hergestellt, der auf der Oberfläche des Trägers, die dann mit einer erfindungsgemäßen Metallschicht bedeckt wurde, eine Grundierung aufwies. Als Grundierung wurden herkömmliche ZweiKomponenten-Acryl- oder Polyurethanlacke verwendet. Das erzielte Ergebnis war von der Art der verwendeten Grundierung unabhängig. Die Grundierung wurde vor Auftragen des Metalls geschliffen.

Ferner wurden alle erfindungsgemäßen Beispiele mit mehreren verschiedenen Metallschichten durchgeführt. Verwendet wurden Metallpigmentschichten, in denen das Metall Aluminium, eine Mischung aus Chrom und Chrom(III)-Oxid oder eine Mischung aus allen drei der vorangehenden Verbindungen war. Der erfindungsgemäße Effekt war für alle Metalle unabhängig von der Art des Metalls zu beobachten.

Nachdem eine Trennschicht (wie in den folgenden Beispielen beschrieben) auf der Metallschicht erstellt wurde, wurde eine Klarlackschicht auf die Trennschicht aufgebracht. Verwendet wurde in allen Fällen ein 2 Komponentenklarlack Axalta Marine Finishes Imron Super Flow Clearcoat HS DP6940 (mit Härter Axalta Marine Finishes HS Activator Slow DP2110) der Firma Axalta Coating Systems (vormals DuPont). Prinzipiell ist allerdings auch jeder andere handelsübliche Klarlack zur Verwendung in der erfindungsgemäßen Klarlackschicht geeignet.

### Beispiel 1

Eine Polyurethan-Dispersion PU 61 der Firma Kremer Pigmente, enthaltend ein aliphatisches Polycarbonat-Polyurethan ohne freie Isocyanatgruppen, wurde im Verhältnis 2:1 mit einem Lösungsmittelgemisch, bestehend aus destilliertem Wasser und Isopropanol in einem Verhältnis von 1:1, verdünnt. In anderen Versuchen wurde die Polyurethan-Dispersion im Verhältnis 2:1 mit destilliertem Wasser verdünnt. In beiden Fällen wurde so eine Viskosität von etwa 12 Sekunden erhalten. Die erhaltene Mischung wurde auf die Metallschicht aufgetragen und getrocknet.

Der so erhaltene Schichtaufbau wies überragende Stabilitätseigenschaften auf. Ferner war ein hervorragender Glanz, eine sehr gute Reflektion und kaum wahrnehmbare Wölkchenbildung, das heißt Trübung, zu beobachten.

### Beispiel 2

Ein Polyvinylpyrrolidon wurde mittels eines Treibgases aus einer Sprühdose auf die Metallschicht aufgetragen, um die Trennschicht auszubilden.

Der erhaltende Schichtaufbau wies eine hervorragende Stabilität und sehr gute optische Eigenschaften hinsichtlich Glanz, Reflektion und Wölkchenbildung auf.

### Beispiel 3

Zur Ausbildung der erfindungsgemäßen Trennschicht wurde eine Ecrothan^{®}95 Polyurethan-Dispersion der Firma Ecronova Polymer verwendet. Das Auftragen erfolgte wie in Beispiel 1. Die erhaltenden Eigenschaften hinsichtlich Stabilität und Optik waren mit denen des Beispiels 1 vergleichbar.

### Beispiel 4

Zur Ausbildung der erfindungsgemäßen Trennschicht wurde eine Bayhydrol^{®} UH XP 2648/1 Polyurethan-Dispersion der Firma Bayer verwendet. Das Auftragen erfolgte wie in Beispiel 1.

Die erhaltenden Eigenschaften hinsichtlich Stabilität und Optik waren mit denen des Beispiels 1 vergleichbar.

### Beispiel 5

Die Trennschicht wurde unter Verwendung eines Kunstharzlackes auf Testbenzin-Lösungsmittelbasis erstellt. Es wurden verschiedene Kunstharzlacke getestet, wobei sich die Testbenzin-Lösungsmittelbasis als wesentlich herausstellte.

Auch mit einem solchen Kunstharzlack konnten ähnliche Stabilitäts- und optische Eigenschaften wie in den Beispielen 1 bis 4 beobachtet werden.

### Beispiel 6 (Vergleichsbeispiel)

Mehrere Schichtaufbauten, in denen verschiedene Grundierungen und Metalle in der Metallschicht getestet wurde, wurden wie im vorangehenden beschrieben hergestellt, wobei auf das Aufbringen einer erfindungsgemäßen Trennschicht zwischen der Metallschicht und der Klarlackschicht verzichtet wurde. In allen Fällen konnte nach verhältnismäßig kurzer Zeit (wenige Minuten) eine chemische Reaktion, das heißt eine Verfärbung, an der Metalloberfläche festgestellt werden.

Die in der vorstehenden Beschreibung, sowie in den Ansprüchen offenbarten Merkmale der Erfindung können sowohl einzeln, als auch in Kombination für die Verwirklichung der Erfindung in ihren verschiedenen Ausführungsformen wesentlich sein.

## Patentansprüche

1. Schichtaufbau, umfassend:
a) eine Metallschicht,
b) eine Trennschicht, und
c) eine Klarlackschicht,
wobei die Trennschicht zwischen der Metallschicht und der Klarlackschicht angeordnet ist, und
wobei die Trennschicht zumindest einen Stoff, ausgewählt aus der Gruppe, bestehend aus einer Polyurethan-Dispersion, Polyvinylpyrrolidon, einem Kunstharzlack auf Testbenzin-Lösungsmittelbasis oder Mischungen derselben, vorzugsweise Polyurethan-Dispersion, umfasst.

2. Schichtaufbau nach Anspruch 1, wobei ein Metall oder Metalloxid in der Metallschicht ausgewählt ist aus Chrom, Chrom(III)-Oxid, Aluminium, Eisen, Kupfer, Messing, Edelmetall oder Mischungen derselben, vorzugsweise Aluminium oder eine Mischung aus Chrom und Chrom(III)-Oxid.

3. Schichtaufbau nach einem der Ansprüche 1 oder 2, wobei ein Polyurethan der Polyurethan-Dispersion ausgewählt ist aus aliphatischem Polycarbonat-Polyurethan, aliphatischem Polyurethan auf Basis eines Dimeroleoesters, einem aliphatischen, Polyester-Polycarbonat basierenden anionischen Polyurethan oder Mischungen derselben, vorzugsweise aliphatischem Polycarbonat-Polyurethan.

4. Schichtaufbau nach Anspruch 1, wobei die Klarlackschicht einen Polyurethanklarlack, Acrylklarlack, Nanoklarlack oder Mischungen derselben umfasst.

5. Schichtaufbau nach einem der vorangehenden Ansprüche, wobei die Trennschicht in direktem Kontakt mit der Metallschicht ist.

6. Verfahren zur Herstellung eines Schichtaufbaus nach einem der vorangehenden Ansprüche, umfassend:
a) Bereitstellen einer Metallschicht,
b) Aufbringen eines Gemisches, umfassend zumindest einen Stoff, ausgewählt aus der Gruppe, bestehend aus einer Polyurethan-Dispersion, Polyvinylpyrrolidon, Kunstharzlack auf Testbenzin - Lösungsmittelbasis oder Mischungen derselben, vorzugsweise Polyurethan-Dispersion, sowie ein Lösungsmittel, auf der Metallschicht,
c) Trocknen des Gemischs, um eine Trennschicht auszubilden, wobei während des Trocknens das Lösungsmittel zumindest teilweise verdampft wird, und
d) Aufbringen einer Klarlackschicht auf die Trennschicht.

7. Verfahren nach Anspruch 6, wobei das Lösungsmittel ein organisches Lösungsmittel, vorzugsweise Isopropanol, und/oder Wasser ist.

8. Verwendung einer Trennschicht wie in einem der vorangehenden Ansprüche definiert, wobei die Trennschicht wie in einem der vorangehenden Ansprüche definiert ist, zum Beschichten einer Metallschicht zum Schutz der Metallschicht vor äußeren Einflüssen.

9. Verwendung des Schichtaufbaus nach einem der Ansprüche 1 bis 5 oder erhältlich durch das Verfahren nach einem der Ansprüche 6 oder 7 als Beschichtung von Fahrzeugkarosserien oder Boots- bzw. Schiffsrümpfen, insbesondere Yachtrümpfen, von Scheinwerfern, insbesondere Fahrzeugscheinwerfern, Reflektoren, Beschlägen, insbesondere Türgriffen oder Möbelstückgriffen.

## Geänderte Patentansprüche

### Geänderte Patentansprüche gemäss Regel 137(2) EPÜ.

1. Schichtaufbau, umfassend:
a) eine Metallschicht,
b) eine Trennschicht, und
c) eine Klarlackschicht,
wobei die Trennschicht zwischen der Metallschicht und der Klarlackschicht angeordnet ist, und
wobei die Trennschicht zumindest einen Stoff, ausgewählt aus der Gruppe, bestehend aus einer Polyurethan-Dispersion, Polyvinylpyrrolidon, oder Mischungen derselben, vorzugsweise Polyurethan-Dispersion, umfasst.

2. Schichtaufbau nach Anspruch 1, wobei ein Metall oder Metalloxid in der Metallschicht ausgewählt ist aus Chrom, Aluminium, Eisen, Kupfer, Messing, Edelmetall oder Mischungen derselben, vorzugsweise Aluminium.

3. Schichtaufbau nach einem der Ansprüche 1 oder 2, wobei ein Polyurethan der Polyurethan-Dispersion ausgewählt ist aus aliphatischem Polycarbonat-Polyurethan, aliphatischem Polyurethan auf Basis eines Dimeroleoesters, einem aliphatischen, Polyester-Polycarbonat basierenden anionischen Polyurethan oder Mischungen derselben, vorzugsweise aliphatischem Polycarbonat-Polyurethan.

4. Schichtaufbau nach Anspruch 1, wobei die Klarlackschicht einen Polyurethanklarlack, Acrylklarlack, Nanoklarlack oder Mischungen derselben umfasst.

5. Schichtaufbau nach einem der vorangehenden Ansprüche, wobei die Trennschicht in direktem Kontakt mit der Metallschicht ist.

6. Verfahren zur Herstellung eines Schichtaufbaus nach einem der vorangehenden Ansprüche, umfassend:
a) Bereitstellen einer Metallschicht,
b) Aufbringen eines Gemisches, umfassend zumindest einen Stoff, ausgewählt aus der Gruppe, bestehend aus einer Polyurethan-Dispersion, PolyvinylpyrrolidonMischungen derselben, vorzugsweise Polyurethan-Dispersion, sowie ein Lösungsmittel, auf der Metallschicht,
c) Trocknen des Gemischs, um eine Trennschicht auszubilden, wobei während des Trocknens das Lösungsmittel zumindest teilweise verdampft wird, und
d) Aufbringen einer Klarlackschicht auf die Trennschicht.

7. Verfahren nach Anspruch 6, wobei das Lösungsmittel ein organisches Lösungsmittel, vorzugsweise Isopropanol, und/oder Wasser ist.

8. Verwendung einer Trennschicht wie in einem der vorangehenden Ansprüche definiert, wobei die Trennschicht wie in einem der vorangehenden Ansprüche definiert ist, zum Beschichten einer Metallschicht zum Schutz der Metallschicht vor äußeren Einflüssen.

9. Verwendung des Schichtaufbaus nach einem der Ansprüche 1 bis 5 oder erhältlich durch das Verfahren nach einem der Ansprüche 6 oder 7 als Beschichtung von Fahrzeugkarosserien oder Boots- bzw. Schiffsrümpfen, insbesondere Yachtrümpfen, von Scheinwerfern, insbesondere Fahrzeugscheinwerfern, Reflektoren, Beschlägen, insbesondere Türgriffen oder Möbelstückgriffen.
